Europäisches Patentamt

European Patent Office

Office européen des brevets

(11) Publication number: **0 161 079**
**B1**

# EUROPEAN PATENT SPECIFICATION

(45) Date of publication of patent specification: **18.04.90**

(21) Application number: **85302545.0**

(22) Date of filing: **11.04.85**

(51) Int. Cl.⁵: **H 01 M 10/39,** H 01 M 4/62 // H01M4/38, H01M4/40

(54) **Sodium-sulfur storage batteries.**

(30) Priority: **19.04.84 JP 79901/84**
**08.05.84 JP 92503/84**
**08.05.84 JP 92504/84**

(43) Date of publication of application:
**13.11.85 Bulletin 85/46**

(45) Publication of the grant of the patent:
**18.04.90 Bulletin 90/16**

(84) Designated Contracting States:
**DE FR GB**

(56) References cited:
**US-A-4 076 900**
**US-A-4 084 041**
**US-A-4 118 545**

(73) Proprietor: **YUASA BATTERY CO., LTD.**
**6-6, Johsai-cho**
**Takatsuki-shi, Osaka (JP)**

(72) Inventor: **Kagawa, Hiroshi**
**c/o Yuasa Battery Co. Ltd 6-6, Jyousai-cho**
**Takatsuki-shi Osaka (JP)**

(74) Representative: **Barker, Rosemary Anne et al**
**Barlow, Gillett & Percival 94 Market Street**
**Manchester M1 1PJ (GB)**

Courier Press, Leamington Spa, England.

**Description**

This invention relates to a sodium-sulfur storage battery in which a metal sulphide layer is disposed between positive electroconductive material and a solid electrolyte tube. Such a proposal has previously been disclosed in U.S. Patent Specification No. 4,084,041.

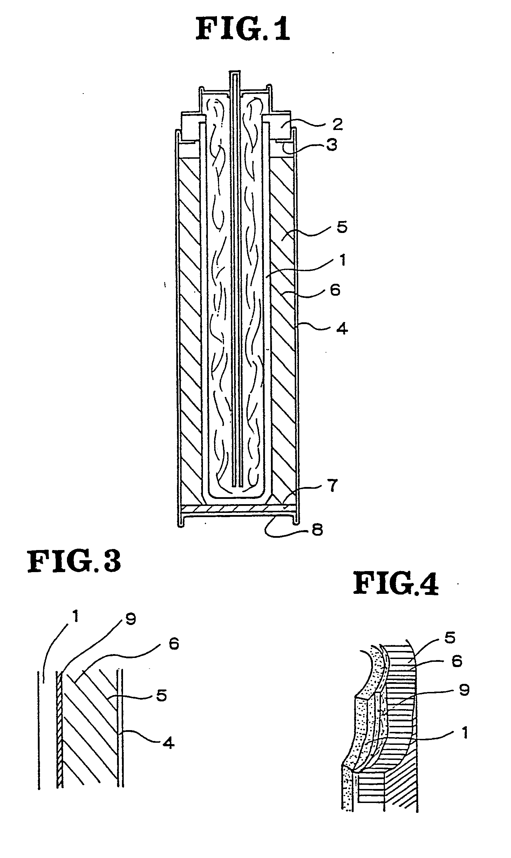

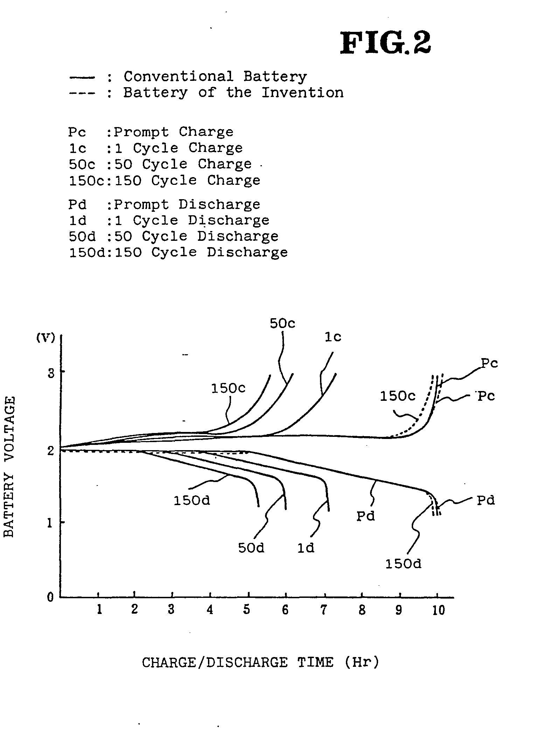

As illustrated in Fig. 1 in longitudinal section, a conventional sodium-sulfur storage battery is provided with a positive chamber formed around a solid electrolyte tube 1 made from beta-dash-alumina, beta-alumina or the like which is permeable to sodium ions. An alpha-alumina ring 2 is jointed with glass to the upper end of the tube 1, and a positive cover 3 is thermocompressively jointed to the lower surface of the alpha-alumina ring 2. Positive electroconductive material 6 such as graphite felt or carbon felt, in which positive reactant 5 such as sulfur or sodium polysulfide is impregnated, is disposed between the solid electrolyte tube 1 and a battery housing 4 welded to the positive cover 3. A circular plate 7 of graphite felt is disposed at the bottom of the housing 4, and a bottom cover 8 is welded to the battery housing 4. At a battery operation temperature from 300°C to 370°C, when the battery is discharged, sodium of negative reactant is ionized, passes through the solid electrolyte tube 1 and reacts on the positive reactant 5 in the positive chamber to form discharge product $Na_2Sx$. When the composition of the positive reactant 5 in the positive electroconductive material 6 changes to $Na_2S_{2.7}$ to $Na_2S_{3.0}$, the discharge stops. When charged, the sodium in the discharge product returns to the negative chamber. As illustrated by the graph of Fig. 2, at prompt discharge, all the sulfur is converted to the aforesaid discharge composition, and the theoretical capacity value is attained. However, at one cycle charge, only about 70% of the reactant is utilized for the charge. Furthermore, the charge-discharge cycles thereafter show a similar tendency, and the charging volume at 150 cycles becomes 54% of the theoretical capacity value and the utilization factor of the positive reactant is about 54%. It has also been ascertained in tests of other batteries that the charging value and the utilization factor decreases further after the aforementioned cycles.

Accordingly, it is an object of the present invention to provide an improved sodium-sulfur storage battery, in which the utilization factor of positive reactant is improved.

With this object in view, the present invention provides a sodium-sulfur storage battery comprising a sodium-ion conductive solid electrolyte tube, a positive electroconductive material comprising graphite felt or carbon felt, and a metal sulfide layer disposed between the solid electrolyte tube and the positive electroconductive material, characterised in that a metal member is disposed between the solid electrolyte tube and the positive electroconductive material to provide said metal sulfide layer by sulphidation of at least the surface of said metal member.

The invention will be described further, by way of example, with reference to the accompanying drawings in which:

Fig. 1 is a longitudinal sectional elevation of a conventional sodium-sulfur storage battery as already described;

Fig. 2 is a graph comparing the differing voltage characteristics upon charging and discharging between a conventional battery and the sodium-sulfur storage battery of the invention;

Fig. 3 is a fragmentary enlarged sectional view of a preferred embodiment of the storage battery of the invention;

Fig. 4 is an enlarged perspective sectional view of part of the preferred storage battery of Fig. 3;

Fig. 5 is a fragmentary perspective view of a divided structure of a positive electroconductive material and a metal member forming part of the preferred battery of the invention; and

Fig. 6 is a view similar to that of Fig. 1, but of another embodiment of a divided structure.

Some of the members and parts of the preferred embodiment of the storage battery illustrated in Figs. 3 and 4 are the same as the members and parts of the conventional storage battery illustrated in Fig. 1 and therefore they are indicated by the same reference numerals. The illustrated preferred embodiment of the sodium-sulfur storage battery comprises a metal member 9, at least the surface of which is sulphidated, disposed between a solid electrolyte tube and a positive electroconductive material 6.

The metal member 9 is provided with passages (not shown) through which sodium ions are adapted to pass to positive reactant 5. In order to form the passages, the metal member 9 is, for example, made from a porous material such as fibre (felt-like non-woven fabric, non-woven fabric consisting of pressurized and burnt fibre and others), knit, sintered member of fibre or powder, plate-like fabric or sintered member provided with infinite pores or slits or net. According to tests, fabric has the best utilization factor of 94%—96% at one cycle. The knit has the utilization factor of 86%—90%, the sintered member has the utilization factor of 87%—92%, the member with pores or slits has the utilization factor of 72%—76% and the net has the utilization factor of 75%—83%, respectively at one cycle. The metal member 9 is made of a basic metal substance or of an alloy such as aluminium, copper, nickel, iron, zinc, lead, tin, stainless steel and magnesium, or alternatively it is coated with one or more of said alloys, so that the surface or the whole body of the member 9 may be readily corroded by the sulfur or sodium polysulfide. Iron is particularly suitable as the material for the member 9. The thickness of the metal member 9 is desirably 2 mm or less. If the thickness is more than 2 mm, the sulphidation of the metal causes a reduction in the amount of the effective sulfur in the positive reactant 5 which contributes to battery reaction, resulting in reduction of battery capacity. Furthermore, a thickness of more than 2 mm increases the thickness of the metal sulfide layer, so that there is interference with the transference of the sodium ions and, thus, internal resistance increases (which also causes a deterioration in the battery performance). Although, the porosity of the metal member 9 is one factor of battery performance it does not particularly affect the performance if the volume percentage is in a range from about 75% to 98%. By merely adding an extra amount of sulfur in accordance with the sulphidation of the metal member 9 the intended performance can be maintained.

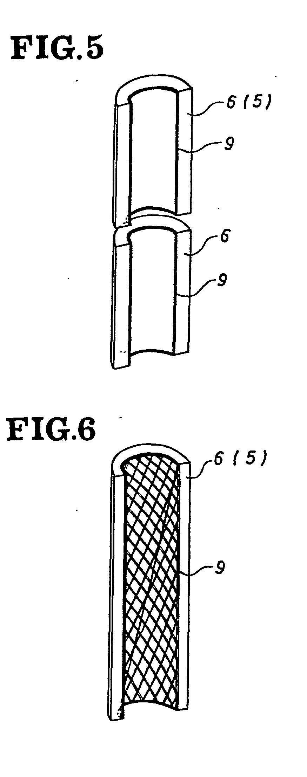

In one embodiment of the sodium-sulfur battery of the invention, the metal member 9 is a non-woven fabric which is 0.4 mm in thickness, has pores having a mean diameter of about 150 μ and is made from iron fibers which are about 25 μ in diameter and about 5 to 100 mm in length. The metal member 9 is disposed on the inner surface of the positive electroconductive material 6, and is impregnated with sulfur and molded under pressure to form a molded body of a positive electrode divided longitudinally into two pieces. With this latter structure, reduction of the battery capacity, as indicated by a dotted line in the graph of Fig. 2, is scarcely perceptible even after 150 cycles, and the utilization factor of the positive reactant is approximately 94%. Furthermore, the present invention has the additional feature that, as illustrated in Fig. 5 and 6 (which will be described in detail later), the metal member 9 is longitudinally, transversely and/or obliquely divided into at least two pieces so as to facilitate the accommodation or molding of the metal member 9, and this division is same as that of the positive electroconductive material 6. This facilitates handling because the metal member 9 is fixed on the surface of the positive electroconductive material 6 by the positive reactant 5. Furthermore, by the accommodation of the metal member 9, when the temperature of the battery increases to a battery operation temperature, the positive reactant 5 melts and operates to press and contact the positive electroconductive material 6 onto the surface of the solid electrolyte tube 1. The primary cause of the increase in the utilization factor of the positive reactant, according to the structure of the present invention, is that the sulphidated metal member 9 operates as an electric resistance layer between the positive electroconductive material 6 and the solid electrolyte tube 1, and partially enters into the positive electroconductive material 6, taking the form of the mud-like substance, so that an electrical resistance gradient is formed, which prevents segregation of the sulfur during the charging and sufficiently promotes the reaction ($Na_2Sx \rightarrow 2Na + xS$) of the positive reactant 5 in the positive electroconductive material 6. This effect appears remarkably in accordance with the sulphidation of the metal member 9, i.e. the increasing of the charge-discharge cycles.

Referring to Fig. 5, in which only one half of a divided structure of metal member 9 and positive electroconductive material 6, is illustrated, the positive electroconductive material 6, being made from graphite felt, and the metal member 9, being made from stainless steel felt, are divided respectively longitudinally and transversely into two pieces, i.e. four pieces in total. The metal member 9 is associated with the inner surface of the positive electroconductive material 6. The positive reactant 5 of the sulfur is impregnated therein, and they are molded under a pressure.

Referring to Fig. 6, again in which only one half of a divided structure as aforesaid is illustrated, the positive electroconductive material 6 of graphite felt is longitudinally divided into two pieces. The metal member 9, of aluminium net, is associated with the inside of the positive electroconductive material 6. They are divided obliquely into four pieces in total. Each piece is molded under a pressure together with the positive reactant 5 of sulfur impregnated therein.

Other embodiments of the divided structure will be described hereinafter.

Embodiment 1

Stainless steel felt, of which the fiber diameter is 8 μ, is molded under pressure to form the metal member 9 having a thickness of 0.8 mm and a porosity of 94%. In this embodiment of the metal member 9, the discharge capacity is 150 AH at 150 cycles, while the prompt discharge capacity is 156 AH.

Embodiment 2

Copper wire of 0.1 mm diameter is formed into a net structure having a thickness of 0.4 mm. In this embodiment the utilization factor of the positive reactant is approximately 78% at 150 cycles.

The size and specification of the metal member 9 and the metal sulfide layer may be modified in accordance with the shape and size of the battery, and the length, width, thickness, porosity, days required for sufficient sulphidation, and amount of the sulfur for the sulphidation are not restricted to those in the aforementioned embodiments.

As stated hereinbefore, the sodium-sulfur storage battery of the present invention can effectively increase the utilization factor of the positive reactant and, thus, is highly valuable in the industrial field.

**Claims**

1. A sodium-sulfur storage battery comprising a sodium-ion conductive solid electrolyte tube (1), a positive electroconductive material (6) comprising graphite felt or carbon felt, and a metal sulfide layer disposed between the solid electrolyte tube (1) and the positive electroconductive material (6), characterised in that a metal member (9) is disposed between the solid electrolyte tube (1) and the positive electroconductive material (6) to provide said metal sulfide layer by sulphidation of at least the surface of said metal member (9).

2. A sodium-sulfur storage battery as claimed in claim 1 wherein said metal member (9) is molded under pressure onto the inner surface of the positive electroconductive material (6).

3. A sodium-sulfur storage battery as claimed in claim 1 or 2 wherein said metal of said metal sulfide layer is aluminium, nickel, copper, iron, tin, zinc, lead, magnesium or chrome.

4. A sodium-sulfur storage battery as claimed in any preceding claim wherein said metal sulfide layer is 2 mm or less in thickness.

5. A sodium-sulfur storage battery as claimed in any preceding claim wherein said metal member (9) is porous.

6. A sodium-sulfur storage battery as claimed in any preceding claim wherein said metal member comprises a fabric such as felt or non-woven fabric, or a knit, or plate-like body including pores or slits, or a sintered body.

7. A sodium-sulfur storage battery as claimed in any preceding claim wherein said metal member (9) is divided longitudinally, transversely or obliquely into at least two pieces.

8. A sodium-sulfur storage battery as claimed in any preceding claim wherein said metal member (9) is coated with or made from an alloy or simple substance such as aluminium, nickel, copper, iron, tin, zinc, lead, magnesium, chrome or stainless steel.

9. A sodium-sulfur storage battery as claimed in any preceding claim wherein said metal member (9) is adapted to be sulphidated by positive reactant impregnated into the positive electroconductive material (6).

## Patentansprüche

1. Natrium-Schwefel-Speicherbatterie mit einer massiven, für Natriumionen leitfähigen Elektrolyt-Röhre (1), einem aus Graphit- oder Kohlefilz bestehenden Material (6) mit positiver elektrischer Leitfähigkeit und einer zwischen der massiven Elektrolyt-Röhre (1) und dem Material (6) mit positiver elektrischer Leitfähigkeit angeordneten Metallsulfid-Schicht, dadurch gekennzeichnet, daß ein Metallelement (9) zwischen der massiven Elektrolyt-Röhre (1) und dem Material (6) mit positiver elektrischer Leitfähigkeit angeordnet ist, um besagte Metallsulfid-Schicht durch Sulfidieren mindestens der Oberfläche des besagten Metallelementes (9) zu erzeugen.

2. Natrium-Schwefel-Speicherbatterie nach Anspruch 1, wobei besagtes Metallelement (9) unter Druck an die innere Oberfläche des Materials (6) mit positiver elektrischer Leitfähigkeit angeformt ist.

3. Natrium-Schwefel-Speicherbatterie nach Anspruch 1 oder 2, wobei besagtes Metall der besagten Metallsulfid-Schicht Aluminium, Nickel, Kupfer, Eisen, Zinn, Zink, Blei, Magnesium oder Chrom ist.

4. Natrium-Schwefel-Speicherbatterie nach einem der vorhergehenden Ansprüche, wobei besagte Metallsulfid-Schicht eine Dicke von 2 mm oder weniger aufweist.

5. Natrium-Schwefel-Speicherbatterie nach einem der vorhergehenden Ansprüche, wobei besagtes Metallelement (9) porös ist.

6. Natrium-Schwefel-Speicherbatterie nach einem der vorhergehenden Ansprüche, wobei besagtes Metallelement aus einem Gewebe wie Filz oder ungewobenem Stoff oder aus einem Gestrick oder einem plattenförmigen Körper mit Poren oder Schlitzen oder aus einem gesinterten Körper besteht.

7. Natrium-Schwefel-Speicherbatterie nach einem der vorhergehenden Ansprüche, wobei besagtes Metallelement (9) längs, quer oder schräg in mindestens zwei Teile geteilt ist.

8. Natrium-Schwefel-Speicherbatterie nach einem der vorhergehenden Ansprüche, wobei besagtes Metallelement (9) mit einer Legierung oder einem gewöhnlichen Material wie Aluminium, Nickel, Kupfer, Eisen, Zinn, Zink, Blei, Magnesium, Chrom oder rostfreiem Stahl beschichtet ist oder aus diesen Materialien besteht.

9. Natrium-Schwefel-Speicherbatterie nach einem der vorhergehenden Ansprüche, wobei besagtes Metallelement (9) bearbeitet ist, um durch ein positives Reaktionsmittel, mit dem das Material (6) mit positiver elektrischer Leitfähigkeit getränkt ist, sulfidiert zu werden.

## Revendications

1. Batterie d'accumulateur sodium-soufre comprenant un tube d'électrolyte solide à conduction ion-sodium (1), un matériau à conduction positive (6) comprenant un feutre graphite ou carboné, et une couche de sulfure métallique disposée entre le tube d'électrolyte solide (1) et la matériau à conduction positive (6), caractérisée en ce qu'un élément métallique (9) est disposé entre le tube d'électrolyte solide (1) et le matériau à conduction positive (6) pour réaliser ladite couche de sulfure métallique par sulfuration d'au moins la surface dudit élément métallique (9).

2. Batterie d'accumulateur sodium-soufre selon la revendication 1, caractérisée en ce que ledit élément métallique (9) est moulé sous pression sur la surface interne du matériau à conduction positive (6).

3. Batterie d'accumulateur sodium-soufre selon la revendication 1 ou 2, caractérisée en ce que ledit métal de ladite couche de sulfure métallique est l'aluminium, le nickel, le cuivre, le fer, l'étain, le zinc, le plomb, le magnésium ou le chrome.

4. Batterie d'accumulateur sodium-soufre selon l'une quelconque des revendications précédentes, caractérisée en ce que la couche de sulfure métallique fait 2 mm ou moins d'épaisseur.

5. Batterie d'accumulateur sodium-soufre selon l'une quelconque des revendications précédentes, caractérisée en ce que ledit élément métallique 9 est poreux.

6. Batterie d'accumulateur sodium-soufre selon l'une quelconque des revendications précédentes, caractérisée en ce que ledit élément métallique comprend une toile telle qu'un feutre ou une toile non-tissée, ou une maille, ou un corps de type plaque renfermant des pores ou des fentes ou un corps fritté.

7. Batterie d'accumulateur sodium-soufre selon l'une quelconque des revendications précédentes, caractérisée en ce que ledit élément métallique (9) est divisé longitudinalement, transversalement ou obliquement en au moins deux pièces.

8. Batterie d'accumulateur sodium-soufre selon l'une quelconque des revendications précédentes, caractérisée en ce que ledit élément métallique (9) est revêtu ou fait à partir d'un alliage ou d'une substance simple telle que l'aluminium, le nickel, le cuivre, le fer, l'étain, le zinc, le plomb, le magnésium, le chrome ou l'acier inoxydable.

9. Batterie d'accumulateur sodium-soufre selon l'une quelconque des revendications précédentes, caractérisée en ce que ledit élément métallique (9) est adapté pour être sulfuré par le réactif positif imprégné dans le matériau à conduction positive (6).

EP 0 161 079 B1

# FIG.1

# FIG.3

# FIG.4

# FIG.2

— : Conventional Battery
--- : Battery of the Invention

Pc   :Prompt Charge
1c   :1 Cycle Charge
50c  :50 Cycle Charge ·
150c:150 Cycle Charge

Pd   :Prompt Discharge
1d   :1 Cycle Discharge
50d  :50 Cycle Discharge
150d:150 Cycle Discharge

CHARGE/DISCHARGE TIME (Hr)

# FIG.5

6 (5)

9

6

9

# FIG.6

6 (5)

9